Europäisches Patentamt

(19) European Patent Office

Office européen des brevets

(11) Numéro de publication: **0 206 871
B1**

(12) **FASCICULE DE BREVET EUROPEEN**

(45) Date de publication du fascicule du brevet:
01.02.89

(51) Int. Cl.⁴: **B01J 29/28**, C10G 11/05

(21) Numéro de dépôt: 86401138.2

(22) Date de dépôt: **29.05.86**

(54) Zéolithe oméga stabilisée et désaluminée.

(30) Priorité: 19.06.85 FR 8509432
08.07.85 FR 8510529
16.07.85 FR 8510990

(43) Date de publication de la demande:
30.12.86 Bulletin 86/52

(45) Mention de la délivrance du brevet:
01.02.89 Bulletin 89/5

(84) Etats contractants désignés:
AT BE DE GB IT NL

(56) Documents cités:
EP-A- 0 214 042
FR-A- 1 548 382
FR-A- 2 563 445
US-A- 4 331 643
US-A- 4 384 161

CHEMICAL COMMUNICATION,
no. 12, 18 juin 1969, pages 659-660; R.M. BARRER et al.:
"Probable structure of zeolite omega"

(73) Titulaire: INSTITUT FRANCAIS DU PETROLE, 4, Avenue
de Bois-Préau, F-92502 Rueil-Malmaison(FR)

(72) Inventeur: Raatz, Francis, 17, rue Michelet,
F-92500 Ruell malmaison(FR)
Inventeur: Marcilly, Christian, 91 ter rue Condorcet,
F-78800 Houilles(FR)

ACTORUM AG

**Description**

La présente invention est relative à un nouveau catalyseur amélioré de craquage de fractions pétrolières lourdes, à base de zéolithe oméga stabilisée et désaluminée. De manière plus précise ce catalyseur est caractérisé par la présence par exemple, à raison de 3 à 50% en poids, d'une zéolithe oméga très appauvrie en ions alcalins, dont le rapport global moléculaire $SiO_2/Al_2O_3$ est supérieur ou égal à 10, diluée dans une matrice à base de silice-alumine amorphe et/ou d'argile par exemple. Ce nouveau catalyseur présente à conversion comparable et à production de coke comparable, une sélectivité en distillats moyens (LO) supérieure à celle de la plupart des catalyseurs de l'art antérieur.

L'introduction du procédé de craquage catalytique dans l'industrie pétrolière à la fin des années 1930 a constitué un progrès déterminant par rapport aux techniques existantes, en permettant l'obtention de rendements très améliorés en essence pour automobile de qualité très supérieure. Les premiers procédés fonctionnant en lit fixe (procédé HOUDRY par exemple) ont rapidement été supplantés par les procédés en lit mobile et surtout depuis le milieu des années 1940 par ceux en lit fluide (FCC ou Fluid Catalytic Cracking). Au tout début de leur utilisation, les procédés de craquage catalytiques traitaient presque exclusivement des Distillats Sous Vide (DSV) pauvres en soufre et relativement légers (point d'ébullition final inférieur à 540–560).

Le craquage de ces charges est réalisé vers 500°C à une pression totale voisine de la pression atmosphérique et en l'absence d'hydrogène. Dans ces conditions, le catalyseur se recouvre rapidement de coke et il est nécessaire de procéder constamment à sa régénération. Dans les procédés de craquage en lit fluide (FCC) ou en lit mobile (tel que le TCC), le catalyseur circule en permanence entre la zone réactionnelle où il réside pendant un temps de l'ordre de plusieurs secondes à plusieurs dizaines de secondes, et le régénérateur où il est débarassé du coke par combustion entre 600 et 750°C environ en présence d'oxygène dilué. Les unités à lit fluide (FCC) sont maintenant beaucoup plus répandues que celles à lit mobile. Le catalyseur y circule à l'état fluidisé sous forme de petites particules de diamètre moyen compris entre $50 \cdot 10^{-6}$ et $70 \cdot 10^{-6}$ m, la granulométrie de cette poudre s'étalant approximativement entre $20 \cdot 10^{-6}$ et $100 \cdot 10^{-6}$ m.

Les catalyseurs utilisés dans les premières unités FCC construites étaient des solides riches en silice obtenus soit par traitement acide d'argiles naturells, soit des silice-alumines synthétiques. Les principaux progrès enregistrés en FCC jusqu'à la fin des années 50 ont été entre autres:
– L'utilisation de la technologie d'atomisation ("spray drying") permettant de préparer les catalyseurs sous forme de fines particules sphériques plus facilement fluidisables et plus résistantes à l'attrition que les poudres obtenues par broyage
– La synthèse de silice-alumines synthétiques, tout d'abord riches en silice "low Alumina" ou Lo-Al à environ 85% pds de silice puis plus riches en alumine ("High Alumina" ou Hi-Al à environ 75% pds de $SiO_2$)
– Et diverses améliorations très importantes dans les domaines de la métallurgie et de la conception des équipements utilisés, notamment au niveau de la régénération.

C'est au début des années 1960 qu'est intervenue une percée majeure dans le domaine du craquage catalytique, avec l'utilisation des tamis moléculaires et plus précisémment des zéolithes de structure faujasite, tout d'abord dans le procédé à lit mobile, puis un peu plus tard, dans le FCC. Ces zéolithes, incorporées dans une matrice constituée notamment de silice-alumine amorphe et pouvant contenir des proportions variables d'argile, sont caractérisées par des activités craquantes vis à vis des hydrocarbures environ 1000 à 10 000 fois supérieures à celles des premiers catalyseurs utilisés. L'arrivée sur le marché de ces nouveaux catalyseurs zéolithiques a révolutionné le procédé de craquage d'une part par les gains très importants enregistrés au niveau de l'activité et de la sélectivité en essence et d'autre part par les modifications considérables qu'elle a imposées sur la technologie de l'unité, notamment:
– le craquage dans le "riser" (ou tube dans lequel le catalyseur et la charge cheminent de bas en haut, par exemple),
– la diminution des temps de contact
– la modification des techniques de régénération.

La zéolithe X (structure Faujasite caractérisée par un rapport molaire $SiO_2/Al_2O_3$ compris entre 2 et 3 a été la première utilisée. Fortement échangée avec des ions terres-rares, elle possédait une forte activité et une grande résistance thermique et hydrothermique. Vers la fin des années 1960, cette zéolithe a été progressivement remplacée par la zéolithe Y qui possédait une tendance à produire du coke légèrement moindre et surtout une résistance thermique et hydrothermique très améliorée. Actuellement, une grande majorité des catalyseurs proposés (probablement plus de 90%) contiennent une zéolithe Y échangée avec des ions de terres rares et/ou des ions ammonium.

A partir du début des années 1970, l'industrie du pétrole commença à souffrir d'un manque de disponibilité en pétrole brut, alors que la demande pour des quantités croissantes d'essence à haut indice d'octane ne cessait de progresser. De plus, l'approvisionnement s'orientait progressivement vers des bruts de plus en plus lourds. Le traitement de ces derniers constituent un problème difficile pour le raffineur par suite de leurs teneurs élevées en poisons des catalyseurs, notamment en composés azotés et en composés métalliques (nickel et vanadium surtout), des valeurs inhabituelles en Carbone Conradson et surtout en composés asphalténiques.

La nécessité de traiter des charges plus lourdes et d'autres problèmes plus récents, tels que: la suppression progressive mais générale dans l'essence des additifs à base de plomb, l'évolution lente mais sensible dans divers pays de la demande en distillats moyens (kérosène et gazoles), ont incité les raffineurs à rechercher des catalyseurs améliorés permettant d'atteindre les objectifs suivants:

— catalyseurs plus stables thermiquement et hydrothermiquement et plus tolérants aux métaux
— produire moins de coke à conversion identique
— obtenir une essence d'indice d'octane plus élevé
— sélectivité améliorée en distillats moyens.

Compte tenu de la tendance des charges actuelles à produire de plus en plus de coke sur les catalyseurs et de la grande sensibilité au coke des performances des zéolithes, la tendance actuelle est non seulement à rechercher des catalyseurs moins sélectifs en coke mais aussi a pousser la régénération du catalyseur pour laisser le moins possible de coke à l'issue de la combustion et ceci amène, dans certains procédés, à une augmentation de la température du régénérateur. On arrive ainsi à une situation où, dans le régénérateur règnent des pressions partielles élevées de vapeur d'eau, comprises entre 0,2 et 1 bar, et des températures locales au niveau du catalyseur de 750 à 850°C voire même 900°C pendant des durées de l'ordre de quelques dizaines de secondes à quelques minutes. Dans ces conditions, la zéolithe qui est l'agent actif principal du catalyseur peut perdre rapidement une partie importante de son activité par suite de la dégradation irréversible de sa structure. Malgré les astuces techniques diverses mises au point ces dernières années pour limiter la température du régénérateur (adjonction de serpentins pour éliminer les calories par production de vapeur ou refroidissement intermédiaire du catalyseur) ou pour limiter la teneur en vapeur d'eau à haute température (techniques à deux régénérateurs comme celle utilisée dans le procédé R2R de TOTAL-I.F.P.), il est nécessaire que la zéolithe présentée dans le catalyseur de craquage possède une excellente stabilité thermique et hydrothermique.

La zéolithe oméga stabilisée et désaluminée utilisée dans la présente invention possède des propriétés craquantes vis à vis de charges lourdes très intéressantes et différentes de celles des zéolithes de structure faujasite (telle la zéolithe Y) utilisées dans les catalyseurs industriels de craquage de l'art antérieur. Cette zéolithe oméga désaluminée présente également les avantages suivants:

— une grande stabilité thermique et hydrothermique ce qui est très intéressant compte tenu de ce qui a été écrit précédemment.
— une aptitude à produire peu de coke.
— une excellente sélectivité en distillats moyens.

La zéolithe oméga stabilisée et désaluminée utilisée dans les catalyseurs de la présente invention est caractérisée par un rapport molaire $SiO_2/Al_2O_3$ supérieur à 10, une teneur en sodium inférieure à 0,3% en poids et de préférence inférieure à 0,01% en poids. Le solide stabilisé et désaluminé conserve le spectre de diffraction X de la zéolithe $\Omega$ avec des paramètres cristallins a et c inférieurs ou égaux respectivement à 1,814 nm et 0,760 nm.

Sa capacité d'adsorption d'azote à 77 K sous une pression partielle P/po égale à 0,19 est supérieure à 8% poids et de preference à 11% poids. Le solide obtenu par l'invention possède un réseau de pores secondaires dont les rayons sont compris entre 1.5 nm et 14 nm, et de préférence entre 2 nm et 6 nm. Le volume des pores secondaires représente 5 à 50% du volume poreux total de la zeolithe.

La procédure de préparation du produit décrit ci-dessus est basée sur l'alternance d'échanges ioniques avec des cations ammonium, d'attaques acides et (ou) de traitements thermiques en présence ou non de vapeur d'eau. Ces traitements ont été utilisés dans l'art antérieur pour stabiliser diverses zéolithes. Cependant la zéolithe $\Omega$ est reconnu comme étant très peu stable. La préparation de zéolithes $\Omega$ stabilisées et désaluminées en particulier par les traitements cités ce-dessus n'a pas été réussie à ce jour. Les traitements de décationisation et de désalumination décrits dans l'invention améliorent considérablement les propriétés acides de la zéolithe $\Omega$ qui peut alors être utilisée comme catalyseur ou support de catalyseur dans des réactions telles que le craquage et l'hydrocraquage.

La zéolithe OMEGA (dénommée ZSM-4 par la société MOBIL) est l'analogue synthétique de la MAZZITE qui est une zéolithe naturelle. La zéolithe $\Omega$ est synthétisée en présence de cations sodium et de cations organiques, généralement le TMA (tétrapropylammonium) (brevet néerlandais n° 6 710 729, brevet US-A 4 241 036). Le rapport molaire Na/TMA est généralement voisin de 4 (T. WEEKS, D. KIMAK, R. BUJALSKI et A. BOLTON, JCS Farad Trans 1, 72, (1976), 57); F. LEACH et C. MARSDEN, Catalysis by Zeolites, B. IMELIK ed, 1980, p. 141, Elsevier Amsterdam), et le rapport molaire $SiO_2/Al_2O_3$ est compris dans la fourchette 5 à 10 (US-A 4 241 036; T. WEEKS, D. KIMAK, R. BUJALSKI et A. BOLTON, JCS Farad Trans 1, 72, 1976, 57, F. LEACH et C. MARSDEN, Catalysis by Zeolites, B. IMELIK ed., 1980, p. 141, Elsevier Amsterdam; A. ARAYA, T. BARBER, B. LOWE, D. SINCLAIR et A. VARMA, Zeolites, 4, (1984), 263). La zeolithe $\Omega$ cristallise dans le système hexagonal avec des paramètres $\vec{a}$ et $\vec{c}$ voisins de 1.82 nm et 0.76 nm (T. WEEKS, D. KIMAK, R. BUJALSKI et A. BOLTON, JCS Farad Trans 1, 72, (1976), 57, R. BARRER et H. VILLIGER, Chem Comm. (1969), 65). La structure de la zéolithe $\Omega$ est formée de l'arrangement de cages gmelinites reliées entre elles suivant l'axe $\vec{c}$ (W. MEIER, D. OLSON, Atlas of Zeolites Structures Types, DRUCK + VERLAG AG, Zürich, 1978). L'arrangement particulier des cages gmélinites dans la zéolithe $\Omega$, ménage dans la structure un réseau de canaux à 12 côtés de diamètre voisin de 0.74 nm et parallèle à l'axe $\vec{c}$.

3

Avec des pores d'environ 0.7 nm de diamètre, la zéolithe Ω appartient à la catégorie des zéolithes à grande ouverture poreuse ce qui la rend particulièrement attractive pour des réactions telles que le craquage et l'hydrocraquage. Bien qu'elle possède des propriétés à priori intéressantes en catalyse, les performances catalytiques de la zéolithe Ω ont été encore peu explorées. Seul un nombre limité de réactions comme par exemple l'isomérisation des cyclopropanes substitués (F. LEACH et C. MARSDEN, Catalysis by Zeolites, B. IMELIK ed, 1980, p. 141, Elsevier Amsterdam) ou encore le craquage du n-heptane ont été étudiées (A. Perrota et al., Catal 55, 1978, 240).

Pour cette dernière réaction les auteurs indiquent qu'après échange par $NH_4^+$ et calcination à 500°C, la zéolithe Ω possède une activité initiale supérieure à celle de la zéolithe Y. Cependant traitée de cette façon, la zéolithe Ω se désactive extrêmement rapidement.

La principale raison qui explique le nombre limité d'études consacrées jusqu'ici aux propriétés catalytiques de la zéolithe Ω est la faible stabilité thermique de cette zéolithe. En effet il est bien connu dans la littérature scientifique que la zéolithe Ω sous forme NaTMA ou NH4TMA peut être détruite (T. WEEKS, D. KIMAK, R. BUJALSKI et A. BOLTON, JCS Farad Trans 1, 72, (1976), 57) ou voir sa cristallinité considérablement diminuée (F. LEACH et C. MARSDEN, Catalysis by Zeolites, B. IMELIK ed., 1980, p.141, Elsevier, Amsterdam) par une calcination au dessus de 600°C. Plusieurs raisons ont été invoquées pour rendre compte de la fragilité de la zéolithe Ω vis à vis des traitements thermiques. Cette fragilité serait due à des tailles de cristaux trop faibles (T. WEEKS, D. KIMAK, R. BUJALSKI et A. BOLTON, JCS Farad Trans 1, 72, (1976), 57; A. ARAYA, T. BARBER, B. LOWE, D. SINCLAIR et A. VARMA, Zeolites, 4, (1984), 263) ou proviendrait du rôle particulier joué par les cations TMA dans la cohésion de la charpente cristalline (T. WEEKS, D. KIMAK, R. BUJALSKI et A. BOLTON, JCS Farad Trans 1, 72, (1976), 57). La cause de la fragilité thermique de la zéolithe Ω reste encore mal comprise.

Dans certaines conditions opératoires, il est possible de préserver en partie la cristallinité de la zéolithe Ω lors de traitements thermiques. Cependant comme on verra ci-dessous, les produits obtenus ne sont pas intéressants en catalyse acide. La calcination d'une forme NaTMA Ω en faible quantité dans un appareil d'analyse thermique différentielle conduit à un solide qui reste cristallisé à 800°C (A. ARAYA, T. BARBER, B. LOWE, D. SINCLAIR et A. VARMA, Zeolites, 4, (1984), 263); un tel solide n'est pas désaluminé et contient encore tous les cations alcalins de départ. La calcination dans des conditions de lit épais de la forme NH4TMA Ω conduit également à une augmentation de la stabilité thermique (T. WEEKS, D. KIMAK, R. BUJALSKI et A. BOLTON, JCS Farad Trans 1, 72, (1976), 57) mais les solides obtenus ne présentent qu'une activité très modérée en hydrocraquage et isomérisation.

En ce qui concerne la désalumination de la zéolithe Ω, plusieurs techniques ont été proposées. Ces techniques que l'on décrit ci-après ne permettent pas d'aboutir à des solides possédant les spécifications recherchées, en particulier un rapport $SiO_2/Al_2O_3$ élevé combiné à l'existence d'un réseau poreux secondaire. Dans le brevet US-A 3 937 791, est décrit la désalumination de diverses zéolithes dont la zéolithe Ω par des sels de Cr (III). Cette méthode conduit à un remplacement des atomes d'aluminium par des atomes de chrome. Il y a bien désalumination de la structure mais aussi fatalement enrichissement en chrome. Le brevet US-A 4 297 335 propose une technique de désalumination par traitement au fluor gazeux à haute température applicable à plusieurs zéolithes mais qui provoque dans le cas de la zéolithe Ω une dégradation de la structure cristalline. Dans EP-A 100 544, la désalumination de nombreuses zéolithes, dont la zéolithe Ω, par calcination en présence de $SiCl_4$ à des températures inférieures à 200°C est décrite en dépit du fait qu'il est par ailleurs établi que des températures plus élevées sont nécessaires pour désaluminer les zéolithes par cette technique (BEYER et al catalysis by zeolites, (1980) p.203). La désalumination de la zéolithe Ω par $SiCl_4$ est effectivement possible à condition de se placer à des températures élevées de l'ordre de 500°C par exemple (J. KLINOWSKI, M. ANDERSON et J. THOMAS, JCS, Chem. Commun. 1983, p. 525, O. TERASAKI, J. THOMAS, G. MILLWARD Proc. R. Soc. London (A), 395 (1808), 153-64). Cependant même dans ces conditions l'augmentation du rapport Si/Al est apparemment limitée puisque celui-ci passe de 4.24 avant traitement à 4.5 après traitement (J. KLINOWSKI, M. ANDERSON et J. THOMAS J.C.S., Chem. Commun. 1983, p. 525). Dans la mesure où la désalumination par traitement par $SiCl_4$ est une méthode applicable à la zéolithe Ω, il est essentiel de souligner que cette technique conduit irrémédiablement à un remplacement atome par atome des aluminium de la charpente par des silicium (H. BEYER et I. BELENYKAJA, Catalysis by Zeolites, B. IMELIK et al EDITORS (1980), p. 203, Elsevier Amsterdam). On obtient ainsi une zéolithe qui reste parfaitement microporeuse. Il n'y a pas comme dans la technique que l'on préconise dans la présente invention création d'un réseau poreux secondaire. Le réseau secondaire joue un rôle important dans la transformation des hydrocarbures lourds. Par ailleurs d'après J. KLINOWSKI et al, J.C.S., Chem. Commun. 1983, p. 525, la zéolithe Ω désaluminée par $SiCl_4$ voit son volume de maille augmenter, ce qui est exactement l'inverse de ce qui est obtenu par la méthode de la présente invention.

Finalement il apparait que dans l'état actuel de l'art, on ne sait pas préparer une zéolithe Ω forme hydrogène stabilisée, désaluminée, de faible volume de maille et possédant un réseau poreux secondaire. A partir de zéolithes Ω posédant ces propriétés, il est possible de préparer des catalyseurs actifs et sélectifs pour les réactions de craquage et d'hydrocraquage.

On peut obtenir une zéolithe oméga conforme à l'invention, à partir d'une zéolithe oméga de synthèse, renfermant des cations alcalins et des cations organiques, et dont le rapport molaire $SiO_2/Al_2O_3$ est compris entre 6,5 et 10, le procédé de préparation étant caractérisé en ce que (a) dans une première étape, l'on soumet entre 0 et 150°C la zéolithe de synthèse à un traitement d'élimination de la majeure partie des cations organiques, tout en abaissant la teneur en alcalins entre 400 et 900°C, et (b) dans une deuxième étape, on soumet le solide obtenu à l'étape précédente à au moins une calcination, puis à au moins une attaque acide entre 0 et 150°C de façon à obtenir un rapport molaire $SiO_3/Al_2O_3$ supérieur à 10, et parfois selon les utilisations supérieur à 30, voire à 30, voire à 50. Le produit obtenu à l'issue de ces diverses étapes de traitement possède un spectre de diffraction X qui est celui de la zéolithe $\Omega$ (tableau 1). Les paramètres cristallins ont les dimensions suivantes: $\vec{a}$ est de préférence compris dans la fourchette 1,814 nm à 1,794 nm, $\vec{c}$ est de préférence compris dans la fourchette 0,760 nm à 0,749 nm. La capacité d'adsorption d'azote à 77 K pour une pression partielle p/po = 0.19 est supérieure à 8% poids. Le réseau poreux n'est plus uniquement constitué de micropores mais comprend un réseau de mesopores dont les rayons mesurés par la méthode BJH (voir plus loin) sont situés entre 1,5 nm et 14 nm et plus particulièrement entre 2 et 6 nm. Le volume des mésopores correspond à environ 5 à 50% du volume poreux total de la zéolithe.

• Caractérisation des zéolithes $\Omega$ désaluminées

La zéolithe $\Omega$ riche en silice obtenue dans la présente invention a été caractérisée par les techniques suivantes:

– Diffraction des rayons X

L'appareillage utilisé comprend: un générateur PHILIPS PW 1130 (35 mA, 35kV), un goniomètre PHILIPS PW 1050, un tube Cu (foyer fin), un monochromateur arrière cristal de graphite, un passeur automatique d'échantillon.

A partir des spectres de diffraction des rayons X, on a mesuré pour chaque échantillon, la surface du fond sur une plage (2 θ) de 6 à 32° d'une part, et dans la même zone, la surface des raies en nombre d'impulsions pour un enregistrement pas à pas de 2 secondes sur des pas de 0.02° (2 θ). Le pourcentage de produit cristallisé est exprimé par le rapport

$$\frac{\text{surface des raies}}{\text{surface totale}}$$

On compare ensuite les rapports de chaque échantillon traité par rapport à une référence étalon de la même série que l'échantillon et contenant une quantité inférieure ou égale à 3% en poids de sodium. Ainsi le taux de cristallinité est exprimé en pourcentage par rapport à une référence prise arbitrairement à 100.

Il est important de bien choisir la référence, car dans certains cas, il peut y avoir une exhaltation ou une diminution d'intensité des raies, en fonction de la teneur en cations des échantillons.

Les paramètres cristallins ont été calculés par la méthode des moindres carrés à partir de la formule (maille hexagonale):

$$d = \sqrt{\left[\frac{4}{3} a^2 (h^2 + k^2 + hk)\right] + \frac{l^2}{c^2}}$$

– Microporosité et mésoporosité

Le volume microporeux est estimé à partir de la quantité d'azote adsorbée à P/PO = 0.19.

La mesoporité secondaire est déterminée par la technique BJH (BARRET, JOYNER, HALENDA, J. Am. Chem. Soc, 73, (1951), 373) basée sur l'exploitation numérique de l'isotherme de désorption d'azote. Le volume poreux total est pris à une pression d'azote telle que P/Po = 0.95, P étant la pression d'azote de la mesure et Po la pression de vapeur saturante de l'azote à la température de la mesure.

Analyse quantitative.

La composition chimique des échantillons a été déterminée par analyse chimique classique: fluorescence X et absorption atomique.

• Préparation des zéolithes $\Omega$ désaluminées

La zéolithe $\Omega$ de départ est obtenue par synthèse. Elle contient des cations alcalins (généralement $Na^+$) et des cations organiques (généralement TMA ou TPA). Le rapport

$$\frac{\text{cations alcalins}}{\text{cations organiques + cations alcalins}}$$

est généralement compris dans la fourchette 1.0 et 0.50 et le rapport molaire

$$\frac{SiO_2}{Al_2O_3}$$

est situé entre 6.5 et 10.

La méthode utilisée dans la présente invention pour obtenir une zéolithe $\Omega$ désaluminée et stabilisée est la suivante:

On prépare tout d'abord par les techniques connues dans l'art antérieur une zéolithe $\Omega$ non désaluminée exempte de cations organiques et à très faible teneur en alcalin (teneur en sodium inférieure à 0.3% et de préférence 0.01% en poids). Une des possibilités pour aboutir à cette zéolithe $\Omega$ intermédiaire est la suivante:

– Elimination des cations organiques par une calcination sous mélange gaz inerte plus oxygène (la teneur molaire en oxygène est supérieure à 2% et de préférence supérieure à 10%) à des températures comprises entre 400 et 900°, éventuellement entre 450 et 650°C et de préférence situées entre 500 et 600°C pendant une durée supérieure à 20 mn.

– Elimination des cations alcalins par au moins un échange cationique à une température comprise entre 0 et 150°C dans une solution d'un sel d'ammonium ionisable (nitrate, sulfate, chlorure, acétate etc.) de molarité située entre 3 et la saturation, et de préférence entre 4 et 10.

Il est possible d'inverser l'ordre élimination des cations organiques – élimination des cations alcalins ou encore d'omettre l'étape de décomposition thermique des cations organiques.

A l'issue de cette série de traitements, le solide n'est pas désaluminé et contient moins de 0.3% et de préférence moins de 0.01% de sodium en poids.

La zéolithe $\Omega$ obtenue après cette première série de traitements, est soumise à une calcination en présence ou non de vapeur d'eau. Deux techniques peuvent être utilisées:

– calcination sous air ou en atmosphère inerte, contenant de préférence entre 5% et 100% de vapeur d'eau avec des débits totaux compris entre par exemple 0.01 et 100 1 h$^{-1}$ g$^{-1}$. La température de calcination est située de préférence entre 500 et 900°C, la durée du traitement étant supérieure à une demi-heure et de préférence supérieure à une heure.

– Calcination entre 500 et 900°C en atmosphère confinée, c'est-à-dire avec un débit de gaz extérieur nul. Dans ce cas, la vapeur d'eau nécessaire au traitement est apportée par le produit lui-même (self steaming).

Après la calcination, en présence éventuelle de vapeur d'eau, la zéolithe $\Omega$ est soumise à au moins une attaque acide à une température comprise entre 0 et 150°C. Les acides utilisés peuvent être minéraux (acide chlorhydrique, nitrique, bromhydrique, sulfurique, perchlorique) ou organiques (acétique ou benzoïque par exemple). La normalité de l'acide est située généralement entre 0.1 et 10 N (de préférence entre 0.5 et 2.0 N) avec un rapport volume/poids exprimé en cm$^3$ g$^{-1}$ compris entre 2 et 10. La durée du traitement est supérieure à une demi-heure. Il est préférable de réaliser l'attaque acide dans des conditions controlées pour éviter la dégradation possible du solide. Ainsi on pourra tout d'abord mettre la zéolithe en suspension dans l'eau distillée puis ajouter l'acide de manière graduelle.

Pour obtenir une zéolithe $\Omega$ stabilisée de rapport molaire SiO$_2$/Al$_2$O$_3$ élevé (supérieur à 10) par la présente invention, le protocole préféré est souvent le suivant:

1) Elimination des cations organiques par calcination sous air.
2) Echange des cations alcalins (Na$^+$) par des cations ammonium.
3) Calcination en présence de vapeur d'eau.
4) Attaque acide.

Pour atteindre le rapport SiO$_2$/Al$_2$O$_3$ désiré, il est nécessaire de bien choisir les conditions opératoires; de ce point de vue les paramètres les plus critiques sont la température et la teneur en vapeur d'eau retenues pour l'étape 3), et la sévérité de l'étape 4) (concentration de l'acide, nature de l'acide, température). Quand des rapports SiO$_2$/Al$_2$O$_3$ particulièrement élevés sont visés, par exemple supérieurs à 30 ou 50, il peut s'avérer nécessaire de procéder à plusieurs cycles (calcination-attaque acide).

La zéolithe oméga dont les caractéristiques et la préparation viennent d'être précisées, doit pour être utilisée comme catalyseur de craquage, être dispersée au sein d'une matrice amorphe. Toutes les matrices connues et utilisées pour les catalyseurs de craquage de l'art antérieur peuvent convenir. De manière préférée elles seront à base de silice-alumines et d'argiles et pourront contenir également de petites quantités d'oxydes divers tel que l'alumine par exemple. La zéolithe oméga stabilisée et désaluminée peut être introduite dans la matrice sous forme hydrogène ou après avoir été échangée par des ions métalliques divers, alcalino-terreux tels que $Mg^{2+}$ et $Ca^{2+}$ ou, de manière préférée appartenant à la famille des terres rares, tels que notamment $La^{3+}$, $Ce^{3+}$, $Nd^{3+}$, $Pr^{3+}$ etc.

Cette zéolithe oméga ainsi stabilisée, désaluminée et éventuellement échangée avec les divers cations précités, peut être ajoutée comme agent actif complémentaire au sein de la matrice d'un catalyseur conventionnel contenant déjà une ou plusieurs autres zéolithes de structures différentes, notamment les zéolithes de structure faujasite X ou Y ou type pentasil telles que ZSM5 ou ZSM11. Parmi les structures faujasites qui conviennent le mieux pour les catalyseurs contenant la zéolithe oméga désaluminée comme seconde structure zéolithique, on mentionnera notamment la zéolithe Y stabilisée, couramment appelée ultrastable ou USY, soit sous forme hydrogène, soit sous forme échangée avec des cations alcalino-terreux et surtout terres-rares.

Les exemples suivants illustrent la présente invention sans en limiter la portée.

Exemple n° 1: Préparation d'une zéolithe $\Omega$ stabilisée et désaluminée de rapport

$$\frac{SiO_2}{Al_2O_3} = 12 \text{ (molaire)}.$$

50 g de zéolithe $\Omega$ de composition molaire 0.90 $Na_2O$ 0.10 $TMA_2O$ $Al_2O_3$ 8.5 $SiO_2$ sont calcinés à 550°C pendant deux heures sous un mélange $N_2 + O_2$ (débit $N_2 = 50$ $1h^{-1}$, débit $O_2 = 5$ $1h^{-1}$) afin de décomposer les cations TMA.

A l'issue de la calcination, la zéolithe est échangée trois fois dans 200 $cm^3$ de solution $NH_4NO_3$ 4N à 100°C pendant 4 heures. Le produit obtenu référencé OM1 a une teneur en sodium inférieure à 0.1% en poids.

La zéolithe OM1 décationisée est calcinée sous vapeur d'eau dans les conditions suivantes:

$$\left\{ \begin{array}{l} - \text{vitesse de montée en température } 10°C \text{ mn}^{-1} \\ - \text{débit air 4 } 1h^{-1} g^{-1} \\ - \text{vapeur d'eau 60 \% molaire} \\ - \text{température finale à 600°C, palier 2 heures.} \end{array} \right.$$

Après la calcination sous vapeur d'eau, la zéolithe $\Omega$ est attaquée à l'acide selon le protocole donné ci-dessous:

$$\left\{ \begin{array}{l} - \text{HCl} = 0.5N \\ - \text{Rapport V/P} = 10 \text{ cm}^3 \text{ solution/g solide sec} \\ - T = 80°C, \text{ durée 4 heures sous agitation.} \end{array} \right.$$

Le solide référencé OM2 par l'ensemble de ces traitements possède un spectre de diffraction X de la zéolithe $\Omega$. Ses propriétés physicochimiques sont les suivantes:

**Caractéristique de la zéolithe $\Omega$ : OM2**
(capacité d'adsorption mesurée à 77 K, P/Po : 0,19)

| $\frac{SiO_2}{Al_2O_3}$ moles | Diffraction X | | | capacité d'adsorption |
|---|---|---|---|---|
| | Cristallinité % | Paramètres | | $N_2$ (% pds) |
| | | a (nm) | c | |
| 12 | 85 % | 1.813 | 0.759 | 11 |

La zéolithe OM2 présente un réseau de mésopores secondaires crées par les traitements qu'elle a subis. Ces mésopores sont centrées aux environs de 4 nm en rayon (60% des pores à environ 4nm, le res-

7

te entre 2 et 14 nm) Volume poreux total: 0,3 g/cc; Volume des pores secondaires: 63% du volume poreux total.

A titre d'exemple, le tableau 2 de la page 21 donne les caractéristiques du diagramme de diffraction X d'une zéolithe oméga.

Exemple 2: Préparation d'une zéolithe $\Omega$ stabilisée et désaluminée de rapport

$$\frac{SiO_2}{Al_2O_3} = 20.$$

A partir de 50 g de zéolithe OM1 décationisée préparée dans les conditions de l'exemple 1, on procède à une calcination sous vapeur d'eau puis à une attaque acide selon les procédures suivantes:

– Calcination sous vapeur d'eau

- vitesse de montée en température $10°C\ mn^{-1}$
- débit air $4\ lh^{-1}\ g^{-1}$
- injection de vapeur d'eau à 400°C, teneur en vapeur d'eau 70 % molaire
- température finale à 650°C, palier 2 heures.

– Attaque acide

- HCl 0.5N
- rapport V/P = 10 $cm^3$ solution/g solide sec
- T = 100°C, durée 4 heures sous agitation.

Comme pour le solide OM2 de l'exemple 1, le solide obtenu par les traitements précédents, référencé OM3 possède un spectre de diffraction X typique de la zéolithe $\Omega$ ainsi qu'un réseau de mesopores secondaires centrées vers 4 nm en rayon.

Les principales caractéristiques physicochimiques de la zéolithe $\Omega$ OM3 sont les suivantes:

| $\dfrac{SiO_2}{Al_2O_3}$ moles | Diffraction X | | capacité d'adsorption |
|---|---|---|---|
| | Cristallinité % | Paramètres a (nm)    c | Azote (% pds) |
| 20 | 88 % | 1.811    0.756 | 14 |

Volume poreux total: 0,3 g/cc; Volume des pores secondaires: 65% du volume poreux total.

Exemple n° 3: Exemple comparatif. Préparation d'une zéolithe $\Omega$ forme hydrogène de rapport

$$\frac{SiO_2}{Al_2O_3} = 8.$$

Sur 100 g de zéolithe $\Omega$ de formule molaire 0.90 $Na_2O$ 0.10 $TMA_2O$ $Al_2O_3$ $8SiO_2$ on procède à une calcination à 550°C pendant deux heures sous un mélange $N_2+O_2$ (débit $N_2$ = 70 $1h^{-1}$, débit $O_2$ = 7 $1h^{-1}$) afin d'éliminer les cations TMA.

Après calcination le solide est échangé trois fois dans 500 cm³ d'une solution de NH₄NO₃6N à 100°C pendant 4 heures. La zéolithe obtenue est référencée OM4. Elle possède un spectre de diffraction X typique de la zéolithe Ω. Ses caractéristiques physicochimiques sont les suivantes:

| $\dfrac{SiO_2}{Al_2O_3}$ moles | % Na pds | Diffraction | | capacité d'adsorption |
|---|---|---|---|---|
| | | Cristallinité % | Paramètres a(nm)c | Azote (% pds) |
| 8 | 0.04 | 100 % | 1.818 0.761 | 12 |

Contrairement aux zéolithes Ω désaluminées OM3 et OM2, la zéolithe non désaluminée OM4 ne possède pas de réseau mésoporeux secondaire.

Exemple n° 4: Préparation d'une zéolithe HY de rapport SiO₂/Al₂O₃ = 12 et de paramètre cristallin égal à 2.445 nm.

100 g de zéolithe NaY de composition molaire Na₂O Al₂O₃ 4.7 SiO₂ sont échangés 3 fois dans 600 cm³ d'une solution de NH₄NO₃8N à 100°C pendant 4 heures. La forme NH₄Y obtenue à l'issue de ces échanges a une teneur résiduelle en sodium égale à 1% pds.

La zéolithe NH₄Y est calcinée en présence de vapeur d'eau à 550°C dans les conditions suivantes:

- vitesse de montée en température 20°C mn$^{-1}$

- débit d'air 2 lh$^{-1}$g$^{-1}$

- injection de vapeur d'eau à 400°C, teneur molaire en vapeur d'eau égale à 80 %

- durée du traitement à la température finale 4 heures.

A l'issue de la calcination, le solide est traité dans 500 cm³ d'une solution d'acide chlorhydrique 1N à 100°C durant 4 heures.

Le solide obtenu à l'issue de ces diverses étapes est une zéolithe HY dont les caractéristiques physicochimiques sont données ci-dessous.

| % Na (pds) | $\dfrac{SiO_2}{Al_2O_3}$ (moles) | Diffraction X | | capacité d'adsorption % pds |
|---|---|---|---|---|
| | | Cristallinite (%) | Paramètre (nm) | Azote |
| 0.3 | 12 | 90 | 2.445 | 20 % |

Volume poreux total : 0,35 cc/g ;

Exemple n° 5: Préparation d'une zéolithe Ω désaluminée de rapport

$$\frac{SiO_2}{Al_2O_3} = 20 \text{ rétroéchangée aux terres rares.}$$

Dans une première étape on prépare une zéolithe Ω désaluminée et stabilisée de rapport SiO₂/Al₂O₃ égal à 20 conformément à l'exemple n° 2; on obtient donc une zéolithe Ω dont les caractéristiques physicochimiques sont celles de OM3 (exemple n° 2).

9

Sur 100 g de zéolithe OM3 on procède à un échange dans 1000 cm³ d'une solution de terres rares de molarité en terres rares égale à 0.15N. L'échange est réalisé à 100°C pendant 4 heures. Durant la durée de l'échange le pH est contrôlé et maintenu entre 5 et 5.5. La composition du mélange de terres rares utilisé pour effectuer l'échange est la suivante, en poids:

$La_2O_3$ = 57% poids
$CeO_2$ = 15% poids
$Nd_2O_3$ = 21% poids
$Pr_6O_{11}$ = 7% poids.

A l'issue de l'échange on obtient une zéolithe $\Omega$ aux terres rares Re $\Omega$ dont la teneur totale en terres rares est de 4.8%. Le solide ainsi échangé conserve le rapport $SiO_2/Al_2O_3$ de OM3 ainsi que le spectre de diffraction X de la zéolithe $\Omega$, il est référencé OM5.

A titre d'exemple, on pourrait fabriquer, à partir des zéolithes préparées dans les exemples 1 à 5, des catalyseurs en diluant ces zéolithes à raison par exemple de 20% en poids dans une silice amorphe de granulométrie contrôlée comparable à celle des zéolithes.

Exemple n° 6: Tests de vieillissement hydrothermique et mesure des performances catalytiques en microunité.

Les diverses zéolithes obtenues dans les exemples 1 à 5 sont pastillées puis réduites en petits agrégats à l'aide d'une machine à concasser. La fraction comprise entre 40 µm et 200 µm est ensuite recueillie par tamisage.

Chacune des poudres ainsi obtenues est soumise à un traitement hydrothermique suivant: 8 heures à 750°C sous 1 bar de pression partielle de vapeur d'eau.

Après ce traitement, les paramètres cristallins des divers échantillons ont changé. Les nouvelles valeurs sont présentées dans le tableau 2.

Cet exemple a simplement pour but de simuler un vieillissement industriel sur une zéolithe neuve.

## TABLEAU 2

### Paramètres cristallins des diverses zéolithes après traitement hydrothermique.

| Caractéristiques | 1) OM2 | 2) OM3 | 3) OM4 | 4) HY | 5) Re $\Omega$ |
|---|---|---|---|---|---|
| a nm | 1.801 | 1.799 | 1.805 | 2.430 | 1.802 |
| c nm | 0.752 | 0.749 | 0.754 | / | 0.753 |
| adsorption d'azote $P/Po$ = 0,19 | 9 | 11 | 10 | 18 | 8 |

## Tableau 1

Caractéristiques du diagramme de diffraction X d'une zéolithe Ω stabilisée et desaluminée de paramètres a = 1.800 nm, c = 0.753 préparée selon l'invention

| 2 σ Cu Kα | d (nm) | I/I max. |
|---|---|---|
| 5,67 | 1,559 | <1 |
| 9,83 | 0,900 | 100 |
| 11,35 | 0,779 | 50 |
| 13,05 | 0,678 | 60 |
| 15,04 | 0,589 | 75 |
| 16,36 | 0,542 | 25 |
| 17,05 | 0,520 | 10 |
| 19,12 | 0,464 | 40 |
| 20,54 | 0,432 | 40 |
| 22,82 | 0,390 | 20 |
| 23,73 | 0,375 | 65 |
| 24,30 | 0,366 | 25 |
| 24,90 | 0,358 | 10 |
| 2563 | 0,3475 | 40 |
| 26.27 | 0,3392 | 25 |
| 28,63 | 03117 | 40 |
| 29,28 | 0,3050 | 25 |
| 29,78 | 0,3000 | 25 |
| 30,96 | 0,2889 | 40 |
| 31,04 | 0,2881 | 40 |
| 34,16 | 0,2624 | 10 |
| 34,52 | 0,2598 | 10 |
| 34,58 | 0,2594 | 10 |
| 31,01 | 1,884 | 10 |

Exemple 7:

A partir des échantillons vieillis préparés dans l'exemple 6, 5 catalyseurs de craquage sont préparés en diluant les zéolithes à raison de 20% en poids dans une silice amorphe de granulométrie contrôlée comparable à celle des zéolithes. 4 g de chacun de ces catalyseurs sont introduits dans le réacteur d'une microunité de test MAT. L'aptitude de chaque catalyseur à convertir un distillat sous vide (DSV) est ensuite déterminée dans les conditions suivantes:
– quantité de charge traitée: 1,3 g
– C/O = 3
– durée de l'injection des 1,3 g de charge = 75 secondes en WHSV – vitesse spatiale massique = 15 h$^{-1}$
– température T = 480°C

La charge utilisée (DSV) a les caractéristiques suivantes:

densité 15°C = 0,904

% Pds S = 1,3

% pds N < 0,1

Carbone Conradson % = 0,32

Ni + V (ppm) < 1

ASTM D 1160

$$\left\{\begin{array}{l} PI = 202°C \\ 10\ \% = 307°C \\ 50\ \% = 402°C \\ 90\ \% = 510°C \\ PF\ \ = 585°C \end{array}\right.$$

– Comparaison des performances catalytiques.

Les résultats sont exprimés de la manière suivante:
– Conversion de la charge en % en poids
– rendement en gaz ($H_2$ + hydrocarbures de $C_1$ à $C_4$)
– rendement en essence $C_5$ – 220°C
– rendement en LCO (distillats moyens: 220–380°C)
– coke.
Le tableau 2 les présentent pour les 6 catalyseurs utilisés.

Tableau 2

Résultats des tests MAT

| Performances Catalytiques | Catalyseurs | | | | |
|---|---|---|---|---|---|
| | 1 OM2 | 2 OM3 | 3 OM4 | 4 HY | 5 ReΩ |
| Conversion % pds | 63,9 | 63,0 | 55,4 | 68,0 | 63,8 |
| Gaz ($H_2$+$C_1$–$C_4$) | 15,1 | 14,6 | 13,0 | 17,5 | 14,5 |
| Essence $C_5$–220°C | 45,2 | 45,1 | 38,9 | 45,3 | 45,3 |
| LCO (450–650°C) | 26,1 | 27,3 | 25,7 | 20,8 | 26,8 |
| Coke | 3,6 | 3,3 | 3,5 | 5,2 | 4,0 |

Ces résultats montrent que si la conversion telle qu'elle est définie de manière classique (conversion = gaz + essence + coke) est plus faible dans le cas de la zéolithe oméga que dans celui de la zéolithe Y de référence, la somme des rendements en gaz + essence + LCO + coke est, avec les catalyseurs 1), 2) et 5) supérieure à celle du catalyseur de référence 4 (zéolithe Y). De plus les rendements en distillats moyens (LCO) sont très supérieurs avec ces mêmes catalyseurs 1), 2) et 5). La zéolithe oméga non stabilisée et non désaluminée a une activité et une sélectivité en distillats moyens nettement inférieures à celles des zéolithes omégas objet de la présente invention.

**Revendications**

1) Catalyseur renfermant une zéolithe oméga dont le rapport molaire $SiO_2/Al_2O_3$ est supérieur à 10, la teneur en sodium inférieure à 0,3% en poids, les paramètres cristallins "a" et "c" respectivement inférieurs à 1,814 nm et 0,760 nm, possédant en outre:
– une capacité d'adsorption d'azote à 77K (sous une pression partielle P/Po égale à 0,19) supérieure à 8% en poids,
ladite zéolithe possédant un réseau de pores secondaires (mésopores) dont les rayons sont compris entre 1.5 nm et 14 nm, le volume des pores secondaires étant égal à 5 à 50% du volume poreux total de la zéolithe.
2) Catalyseur selon la revendication 1 dans lequel le paramètre cristallin a de la zéolithe oméga est compris entre 1,814 nm et 1,794 nm, le paramètre cristallin c étant compris entre 0,760 nm et 0,749 nm.
3) Catalyseur selon la revendication 2 dans lequel la teneur en sodium de la zéolithe oméga est inférieure à 0,01% en poids.
4) Catalyseur selon l'une des revendications 2 et 3 dans lequel la zéolithe oméga possède:

– une capacité d'adsorption d'azote à 77 K (sous une pression partielle P/Po égale à 0,19) supérieure à 11% en poids,

ladite zéolithe possédant un réseau de pores secondaires (mésopores) dont les rayons sont compris entre 2 nm et 6 nm, le volume des pores secondaires, étant égal à 5 à 50% du volume poreux total de la zéolithe.

5) Procédé de préparation d'une zéolithe oméga définie selon l'une des revendications 1à 4, ladite zéolithe oméga étant préparée à partir d'une zéolithe oméga de synthèse, renfermant des cations alcalins et des cations organiques, et dont le rapport molaire

$$\frac{SiO_2}{Al_2O_3}$$

est compris entre 6,5 et 10, le procédé de préparation étant caractérisé en ce que (a) dans une première étape, l'on soumet la zéolithe de synthèse à un traitement d'élimination de la majeure partie des cations organiques, tout en abaissant la teneur en alcalins à une valeur inférieure à 0,3% en poids, par un traitement consistant en un échange cationique entre 0° et 150°C et une calcination entre 400° et 900°C, et (b) dans une deuxième étape, on soumet le solide obtenu à l'étape précédente à au moins une calcination, puis à au moins une attaque acide entre 0° et 150°C de façon à obtenir un rapport molaire

$$\frac{SiO_2}{Al_2O_3}$$

supérieur à 10.

6) Procédé selon la revendication 5 dans lequel au cours de la deuxième étape, on soumet la zéolithe de synthèse à au moins une calcination sous air ou en atmosphère inerte entre 500 et 900°C, la température d'attaque acide étant comprise entre 0 et 150°C.

7) Catalyseur selon l'une des revendications 1 à 4, caractérisé en ce qu'il est préparé par le procédé de la revendication 5 ou 6.

8) Procédé de craquage catalytique caractérisé en ce qu'il est effectué en présence d'un catalyseur selon l'une des revendications 1 à 4 ou 7.

9) Procédé selon la revendication 8 dans lequel le catalyseur renferme au moins un métal du groupe des terres-rares.

**Patentansprüche**

1. Katalysator, umfassend einen Omega-Zeolithen, dessen molares Verhältnis SiO₂/Al₂O₃ größer als 10, dessen Gehalt an Natrium kleiner als 0,3 Gew.-%, und dessen kristalline Parameter "a" und "c" jeweils kleiner als 1,814 nm und 0,760 nm ist, und unter anderem besitzt:

– eine Stickstoff-Adsorptionskapazität bei 77 K (unter einem Partialdruck P/Po gleich 0,19) größer als 8 Gew.-%, wobei genannter Zeolith ein Netz von sekundären Poren (Mesoporen) besitzt, deren Radius zwischen 1,5 nm und 14 nm liegt, wobei das Volumen der sekundären Poren gleich 5–50% des gesamten Porenvolumens des Zeolithen beträgt.

2. Katalysator gemäß Anspruch 1, in welchem der kristalline Parameter des Omega-Zeolithen zwischen 1,814 nm und 1, 794 nm liegt, wobei der kristalling Parameter c zwischen 0,760 nm und 0,749 nm liegt.

3. Katalysator gemäß Anspruch 2, in welchem der Gehalt an Natrium des Omega-Zeolithen kleiner als 0,01 Gew.-% ist.

4. Katalysator gemäß einem der Ansprüche 2 und 3, in welchem der Omega-Zeolith besitzt:

– eine Stickstoff-Adsorptionskapazät bei 77 K (unter einem Partialdruck P/Po gleich 0,19) größer als 11 Gew.-%, wobei genannter Zeolith ein Netz von sekundären Poren besitzt (Mesoporen), deren Radius zwischen 2 nm und 6 nm liegt, wobei das Volumen der sekundären Poren gleich 5–50% des gesamten Porenvolumens des Zeolithen beträgt.

5. Verfahren zur Herstellung eines Omega-Zeolithen gemäß einem der Ansprüche 1–4, wobei der genannte Omega-Zeolith hergestellt wird ausgehend von einem Synthese-Omega-Zeolithen, umfassend Alkali-Kationen und organische Kationen, und dessen molares Verhältnis

$$\frac{SiO_2}{Al_2O_3}$$

zwischen 6,5 und 10 liegt, wobei das Herstellungsverfahren dadurch gekennzeichnet ist, daß

a) in einer ersten Stufe man den Synthese-Zeolithen einer Behandlung zur Eliminierung des größten Teils der organischen Kationen unterwirft, wobei man den Gehalt an Alkali auf einen Wert kleiner als 0,3 Gew.-% erniedrigt, durch eine Behandlung bestehend aus einem Kationenaustausch zwischen 0 und 150°C und einer Kalzinierung zwischen 400 und 500°C und

b) in einer zweiten Stufe man den in der vorausgehenden Stufe erhaltenen Feststoff wenigstens einer Kalzinierung unterwirft, dann wenigstens einer Säurebehandlung zwischen 0 und 150°C dergestalt, daß man ein molares Verhältnis

$$\frac{SiO_2}{Al_2O_3}$$

größer als 10 erhält.

6. Verfahren gemäß Anspruch 5, in welchem im Verlauf der zweiten Stufe man den Synthese-Zeolithen wenigstens einer Kalzinierung unter Luft oder unter inerter Atmosphäre zwischen 500 und 900°C unterwirft, wobei die Temperatur der Säurebehandlung zwischen 0 und 150°C liegt.

7. Katalysator gemäß einem der Ansprüche 1–4, dadurch gekennzeichnet, daß er hergestellt ist durch das Verfahren gemäß Anspruch 5 oder 6.

8. Verfahren der katalytischen Crackung, dadurch gekennzeichnet, daß es durchgeführt wird in Anwesenheit eines Katalysators gemäß Anspruch 1–4 oder 7.

9. Verfahren gemäß Anspruch 8, in welchem der Katalysator wenigstens ein Metall der Gruppe der seltenen Erden umfaßt.

## Claims

1) A catalyst containing an $\Omega$ zeolite whose $SiO_2/Al_2O_3$ molar ratio is higher than 10, whose sodium content is lower than 0.3% by weight, whose crystalline parameters "a" and "c" are respectively lower than 1.814 nm and 0.760 nm and which further exhibits a nitrogen adsorption capacity at 77 K (under a partial pressure P/Po equal to 0.19) higher than 8% by weight, said zeolite having a lattice of secondary pores (mesopores) of radii ranging from 1.5 nm to 14 nm, the volume of the secondary pores being equal to 5–50% of the zeolite total pore volume.

2) A catalist according to claim 1, wherein the crystalline parameter a of the $\Omega$ zeolite ranges from 1.814 nm to l.794 nm, the crystalline parameter c being from 0.760 nm to 0.749 nm.

3) A catalyst according to claim 2, wherein the sodium content of the zeolite is lower than 0.01% by weight.

4) A catalyst according to one of claims 2 and 3, wherein the $\Omega$ zeolite 15 exhibits a nitrogen adsorption capacity at 77 K (under a partial pressure P/Po equal to 0.19) higher than 11% by weight, said zeolite having a lattice of secondary pores (mesopores) whose radii range from 2 nm to 6 nm, the volume of the secondary pores being equal to 5–50% of the zeolite total pore volume.

5) A process for manufacturing an $\Omega$ zeolite according to one of claims1 to 4 from a synthetic $\Omega$ zeolite containing alkali cations and organic cations and having a $SiO_2/Al_2O_3$ molar ration from 6.5 to 10, characterised by (a) a first step wherein the synthetic zeolite is subjected to a treatment for removing the major part of the organic cations, while decreasing the alkali content to a value lower than 0.3% by weight, by means consisting of a cationic exchange between 0 and 150°C and a roasting between 400 and 900°C and (b) a second step, wherein the solid obtained in the preceding step is subjected to at least one roasting, then to at least one acid etching between 0 and 150°C so as to obtain a $SiO_2/Al_2O_3$ molar ratio higher than 10.

6) A process according to claim 5, wherein, during the second step, the synthetic zeolite is subjected to at least one roasting in air or inert atmosphere at a temperature from 500 to 900°C, the temperature of the acid etching being from 0 to 150°C.

7) Catalyst according to one of claims 1 to 4 characterized in that it is prepared according to process of claims 5 or 6.

8) A catalytic cracking process characterized in that it is conducted in the presence of a catalyst defined as in claims 1 to 4 or 7.

9) A process according to claim 8, wherein the catalyst contains at least on metal from the rare-earths group.